# EUROPÄISCHE PATENTSCHRIFT

(11) **EP 0 670 793 B1**
(45) Veröffentlichungstag und Bekanntmachung des Hinweises auf die Patenterteilung: **04.09.1996**
(21) Anmeldenummer: 94916818.1
(22) Anmeldetag: 27.11.1993
(51) Int. Cl.: B60T 8/88

(54) **BREMSANLAGE MIT ABS UND EBV**
BRAKING SYSTEM WITH ANTILOCKING DEVICE AND ELECTRONIC BRAKE POWER DISTRIBUTING DEVICE
SYSTEME DE FREIN A DISPOSITIF ANTIBLOQUAGE ET A REPARTITION ELECTRONIQUE DU FREINAGE

(30) Priorität: 02.12.1992 DE 4240493
(43) Veröffentlichungstag der Anmeldung: 13.09.1995
(73) Patentinhaber: ITT Automotive Europe GmbH, D-60488 Frankfurt am Main (DE)
(72) Erfinder: BURGDORF, Jochen, D-63075 Offenbach (DE); FENNEL, Helmut, D-65812 Bad Soden (DE); LATARNIK, Michael, D-61381 Friedrichsdorf (DE)
(74) Vertreter: Blum, Klaus-Dieter, Dipl.-Ing.
(86) Internationale Anmeldenummer: EP9303335
(87) Internationale Veröffentlichungsnummer: WO9412377

(56) Entgegenhaltungen:
- EP-A- 0 395 829
- WO-A-83/00124
- FR-A- 2 523 055
- GB-A- 2 068 068
- US-A- 3 874 743

## Beschreibung

Die Erfindung bezieht sich auf eine Bremsanlage mit elektronischer Blockierschutzregelung (ABS) und elektronisch gesteuerter Bremskraftverteilung (EBV) mit Hilfe von elektrisch betätigten Hydraulikventilen, von denen die Einlaßventile, nämlich die den Druckmittelzufluß zu den einzelnen Radbremsen steuernden Ventile in ihrer Ruhelage auf Durchlaß geschaltet sind, ferner mit einer Regelelektronik zur Erzeugung der Ventil-Steuersignale in Abhängigkeit von Radsensorsignalen, die das Drehverhalten der einzelnen Räder wiedergeben, und mit einer Fehlerüberwachung, die beim Auftreten von Defekten oder Fehlfunktionen anspricht und die Regelung zumindest teilweise abschaltet oder stillegt.

Bei den heute üblichen Bremsanlagen mit Blockierschutzregelung wird der Bremsdruck mit elektrisch oder elektromagnetisch steuerbaren Einlaß- und Auslaßventilen gesteuert. Die Einlaßventile sitzen in dem Druckmittelweg von dem Hauptzylinder zu den Radbremsen, die Druckmittelwege über die Auslaßventile führen von den Radbremsen zu einem Ausgleichsbehälter oder zu einer Druckmittel-Rückförderpumpe. Um bei Abstellung der Regelung oder Abschaltung der Stromversorgung die ungeregelte Bremsenfunktion sicherzustellen, werden dabei die Einlaßventile als SO-Ventile (stromlos offene Ventile), die Auslaßventile als SG-Ventile (stromlos geschlossene Ventile) ausgebildet. Um das gefährliche Überbremsen der Hinterräder in jeder Situation - auch nach Abstellung der Regelung - mit Sicherheit zu vermeiden, sind auch bei solchen schlupfgeregelten Systemen in den Druckmittelwegen zu den Hinterrädern konventionelle Druckminderer bzw. sogenannte Bremskraftregler eingefügt.

Es ist auch schon bekannt, diese Bremskraftregler während einer Blockierschutzregelung zu überbrücken, um im Bedarfsfalle während einer Regelung besonders hohen Bremsdruck in die Hinterradbremsen einsteuern zu können. Bei Reglerausfall kommen die Bremskraftregler voll zur Wirkung.

Des weiteren ist bereits bekannt, die elektrisch betätigbaren, zu einer Blockierschutzregelung benötigten Hydraulikventile auch zur Steuerung der Bremskraftverteilung auf die Vorderachse und Hinterachse, die als Folge der dynamischen Achslastverlagerungen notwendig ist, einzusetzen (DE-A 33 23 402). Nach dieser Schrift werden die zu den Hinterrädern führenden Einlaßventile in Form von SG-Ventilen ausgebildet. In die Radbremsen der Hinterräder wird mit diesen Ventilen der Druck verzögert eingesteuert, und zwar so, daß der Hinterradschlupf maximal einen bestimmten Prozentsatz des an den Vorderrädern auftretenden Schlupfes annimmt. Nach Abschalten der elektronischen Regelung ist bei einer solchen Bremsanlage der Druckmittelweg zu den Hinterrädern permanent gesperrt.

Aus Kostengründen ist man bemüht, blockiergeschützte Bremsanlagen zu verwenden, die ohne zusätzliche Bremskraftregler auskommen. Es wird eine elektronische Steuerung oder Regelung der Bremskraftverteilung mit Hilfe der Blockierschutz-Regelventile, insbesondere der Einlaßventile, gewünscht. Bei Reglerausfall bzw. Abschaltung des Reglers infolge eines Fehlers sollte jedoch nach wie vor eine Bremsdruckeinsteuerung auch in die Hinterradbremsen möglich sein; die Ausbildung des zu den Hinterrädern führenden Ventils als SG-Ventil scheidet folglich aus.

Der Erfindung liegt nun die Aufgabe zugrunde, eine Bremsanlage mit Blockierschutzregelung und elektronischer Bremskraftverteilung zu entwickeln, die auch bei fehlerbedingtem Abschalten des Reglers eine Bremsdruckeinsteuerung in die Hinterradbremsen zuläßt, ohne daß ein Überbremsen der Hinterräder, das bekanntlich mit einer Schleudergefahr einhergeht, eintreten kann.

Es hat sich gezeigt, daß diese Aufgabe mit einer Bremsanlage der eingangs genannten Art gelöst werden kann, deren Besonderheit darin besteht, daß die Regelelektronik mit Sekundärschaltkreisen ausgerüstet ist, die nach Ansprechen der Fehlerüberwachung in Funktion bleiben, über die das zu den Hinterradbremsen führende Einlaßventil ansteuerbar ist und die derart ausgelegt sind, daß eine Konstanthaltung oder Begrenzung des Druckes in den Hinterradbremsen in Abhängigkeit von dem Bremsdruck im Hauptzylinder oder beim Überschreiten einer vorgegebenen Druckschwelle oder in Abhängigkeit von einer fahrzeugdynamischen Meßgröße, wie Fahrzeugverzögerung oder dergleichen, erfolgt. Erfindungsgemäß wird also auch dann, wenn der Regler durch die Fehlerüberwachung abgeschaltet ist, bei Bremsbetätigung Bremsdruck in die Hinterradbremsen solange eingesteuert, bis im Hauptzylinder ein Druckniveau erreicht ist, das ein Überbremsen der Hinterräder befürchten läßt. Ab diesem Zeitpunkt wird der Bremsdruck in den Hinterradbremsen konstant gehalten.

Nach einer vorteilhaften Ausführungsart der Erfindung sind die Hydraulikventile mit Ausnahme der zu den Hinterradbremsen führenden Einlaßventile an die Spannungsversorgung über ein mechanisches oder elektronisches Abschaltrelais angeschlossen, das von der Fehlerüberwachung gesteuert wird und das bei Fehlererkennung die Spannungsversorgung der Hydraulikventile - mit Ausnahme der Hinterrad-Einlaßventile - unterbricht. Es handelt sich bei diesem Relais um ein wirkliches "Abschalt"-Relais. Es ist nicht etwa ein "Umschalten" auf ein anderes Potential oder auf Masse erforderlich. Aus Sicherheitsgründen ist dies von erheblicher Bedeutung.

Nach einer weiteren Ausführungsart der Erfindung weist der Sekundärschaltkreis einen Treiber zur Ansteuerung der zu den Hinterradbremsen führenden Einlaßventile auf, der von der Regelelektronik über einen logischen Verknüpfungsschaltkreis nur dann angesteuert wird, wenn die Stromversorgung der übrigen Hydraulikventile abgeschaltet ist und wenn ein von dem hydraulischen Druck im Hauptzylinder betätigter Druckschalter oder ein auf die Fahrzeugbeschleunigung ansprechender Schalter reagiert hat.

Weiterhin ist es nach einem vorteilhaften Ausführungsbeispiel der Erfindung vorgesehen, daß in an sich bekannter Weise dem Sekundärschaltkreis über die Reglerelektronik Testpulse zugeführt und die Reaktionen auf diese Testpulse auf Plausibilität überwacht werden.

Eine Weiterbildung der Erfindung besteht noch darin, daß mehrere zu den Hinterradbremsen führende Einlaßventile über einen gemeinsamen Sekundärschaltkreis ansteuerbar sind, wobei die Einlaßventile über Entkoppeldioden an eine gemeinsame Endstufe bzw. an den Treiber des Sekundärschaltkreises angeschlossen sind.

Erfindungsgemäß ist es außerdem vorgesehen, daß die druck- oder beschleunigungsabhängigen Schalter, solange die Fehlerüberwachung nicht anspricht, zur Gewinnung zusätzlicher Informationen für die Regelung dienen.

Weitere Merkmale, Vorteile und Anwendungsmöglichkeiten der Erfindung gehen aus der folgenden Beschreibung anhand der beigefügten Abbildungen von Ausführungsbeispielen der Erfindung hervor.

Es zeigen:
- Figur 1: in Blockdarstellung die wichtigsten Komponenten der Regelelektronik einer Bremsanlage nach der Erfindung und
- Figur 2: in gleicher Darstellung wie Figur 1 eine Variante der Regelelektronik.

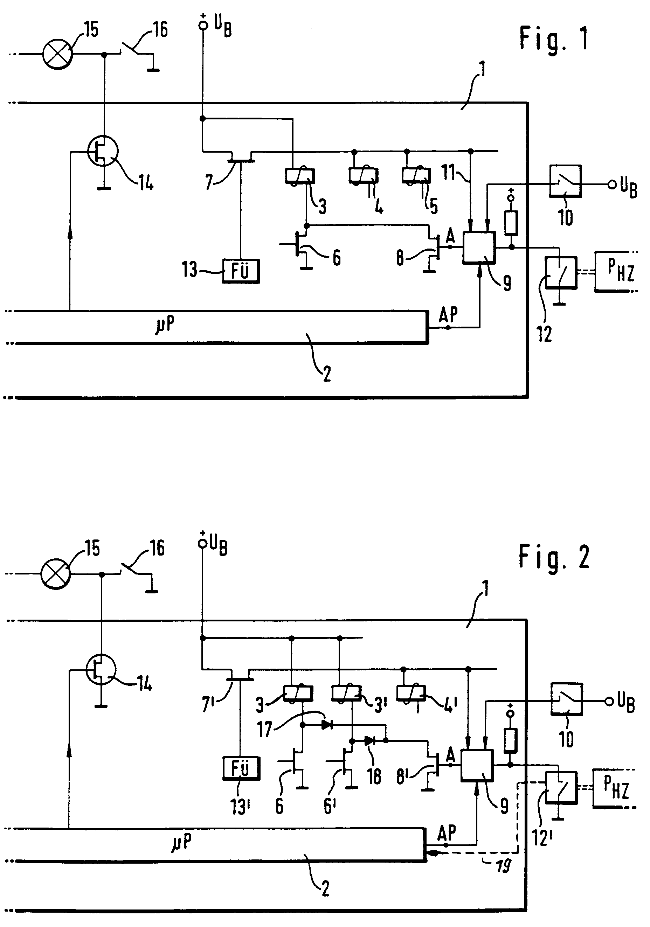

In Figur 1 sind zum besseren Verständnis der Erfindung in symbolischer Darstellung nur die Komponenten wiedergegeben, die für die Erfindung von Bedeutung sind.

Nach Figur 1 enthält eine Regelelektronik 1 einen Rechner oder Mikroprozessor 2, mit dessen Hilfe in bekannter Weise die Signale zur Steuerung der Bremsdruckregelventile, d.h. der Einlaß- und Auslaßventile, und zum Überwachen sowie zum regelmäßigen Testen des Systems auf Funktionsfähigkeit erzeugt werden. Angedeutet sind in Figur 1 die (Wicklung von) drei Regelventilen 3,4,5. Die Bezugsziffer 3 symbolisiert eines der zu den Hinterradbremsen führenden Einlaßventile, das gleichzeitig zur Steuerung der Bremskraftverteilung herangezogen wird. Für die übrigen Einlaß- und Auslaßventile stehen die Symbole 4,5; im allgemeinen wird für jedes Rad ein Einlaß-/Auslaßventilpaar benötigt. Angedeutet ist auch eine Endstufe bzw. ein Treiber 6 in Form eines Leistungstransistors, mit dem das Ventil 3 ein- und ausgeschaltet wird. Alle Ventile sind an die Versorgungsspannung, nämlich an die Batteriespannung U_{B} des Fahrzeugs angeschlossen, und zwar das Ventil 3 direkt, die Ventile 4,5 über ein elektronisches Relais 7.

Der erfindungswesentliche Sekundärschaltkreis umfaßt als wichtigste Elemente eine Endstufe oder einen Treiber 8, der dem Treiber 6 gleicht. Über diesen Treiber 8 kann das Regel- bzw. Einlaßventil 3 eingeschaltet werden. Zu dem Sekundärschaltkreis gehört ferner eine logische Verknüpfungsschaltung 9, an derem Ausgang A das Signal zur Ansteuerung des Treibers 8 zur Verfügung steht.

Gesteuert wird der Sekundärschaltkreis über die Verknüpfungsschaltung 9 durch den Mikroprozessor 2, dessen Ausgang AP zu der Verknüpfungsschaltung 9 führt.

Ein Signal zur Betätigung des Treibers 8 und damit zur Einschaltung der Wicklung des Einlaßventiles 3 steht an dem Ausgang A des Verknüpfungsschaltkreises nur dann an, wenn ein Zündungsschalter 10 geschlossen ist und wenn der Schaltung 9 über eine Signalleitung 11 signalisiert wird, daß das elektronische Relais 7 angesprochen hat und einen Stromfluß von dem Batterie-Anschluß U_{B} zu den Regelventilen 4,5 unterbindet. Weiterhin ist zur Ansteuerung des Treibers 8 notwendig, daß ein Druckschalter 12 geschlossen wurde. Dieser in der Ruhestellung offene Schalter 12 reagiert auf den Bremsdruck P_{HZ} im Hauptzylinder der Bremsanlage und schließt, sobald dieser Druck P_{HZ} einen vorgegebenen Schwellwert überschritten hat.

Das Steuersignal für das elektronische Relais 7 liefert eine Fehlerüberwachung 13. Bei intakter Regelelektronik (und eingeschalteter Zündung) ist das elektronische Relais 7 auf Strom-Durchlaß geschaltet.

Die in Figur 1 wiedergegebene Regelelektronik der erfindungsgemäßen Bremsanlage arbeitet wie folgt:

Im "Normalfall", solange weder ein Defekt noch eine Fehlfunktion vorliegt, - und außerhalb der Überwachungszyklen - ist das elektronische Relais 7 auf Durchlaß geschaltet, so daß die Regelventile 4,5 an die Spannungsversorgung U_{B} angeschlossen sind. Das Einlaßventil 3 ist ständig an die Batterie angeschlossen.

Nach vorgegebenem Muster und zu bestimmten Zeitpunkten, z.B. nach jedem Schließen des Zündungsschalters 10 wird über den Ausgang AP des Mikroprozessors 2 ein Prüfzyklus ausgelöst und über hier nicht näher dargestellte Wege überprüft, ob die entsprechenden Reaktionen und Potentialverschiebungen auftreten. Es ist eine Prüfung nach zahlreichen Plausibilitätskriterien in bekannter und deshalb hier nicht näher erläuterter Weise möglich.

Wird von der Regelelektronik 1 ein Defekt oder eine Fehlfunktion erkannt, wird aus Sicherheitsgründen die Blockierschutzregelung abgeschaltet. Dies geschieht hier durch "Öffnen" des elektronischen Relais 7 durch ein entsprechendes Signal der Fehlerüberwachung 13. Dadurch werden die Regelventile 4,5 stromlos. Lediglich das zu den Hinterradbremsen führende Einlaßventil 3 ist weiterhin an die Spannungsversorgung U_{B} angeschlossen. Wird nun bei der Bremsbetätigung ein vorgegebener Schwellwert des Bremsdruckes P_{HZ} im Hauptzylinder überschritten, spricht der Druckschalter 12 an. Da der Zündungsschalter 10 geschlossen ist und auch das elektronische Relais 7 hochomig wurde, sind in der logischen Verknüpfungsschaltung 9 alle Bedingungen erfüllt, um ein Ausgangssignal am Ausgang A zu generieren, das zur Ansteuerung des Treibers 8 und damit des SO-Einlaßventils 3 führt. Das Einlaßventil 3 schließt und unterbindet jede weitere Drucksteigerung in den Hinterradbremsen. Eine Überbremsung der Hinterräder und damit eine Gefährdung der Fahrstabilität des Fahrzeugs werden vermieden.

In Figur 1 ist außerdem noch ein Treiber 14 dargestellt, der ebenfalls von dem Mikroprozessor 2 angesteuert wird und der zur Einschaltung einer Warnlampe 15 beim Auftreten von Fehlern dient. Angedeutet ist ferner ein Schalter 16, der ebenfalls, z.B. ausgelöst durch zu geringen Bremsflüssigkeitsstand im Vorratsbehälter der Bremsanlage, die Warnlampe 15 einschalten kann. Natürlich gibt es im allgemeinen noch weitere Funktionen die überwacht werden und die im Fehlerfall zum Auslösen der Warnung bzw. zum Einschalten der Lampe 15 führen.

Figur 2 unterscheidet sich von dem Ausführungsbeispiel nach Fig. 1 nur dadurch, daß zwei zu den Hinterradbremsen führende Einlaßventile 3,3' vorhanden sind und überwacht werden. Über zwei Entkopplungsdioden 17,18 sind beide Einlaßventile 3,3' an den gemeinsamen Treiber 8' angeschlossen. Beide Einlaßventile 3,3' sind direkt - unter Umgehung des elektronischen Relais 7' - an die Batteriespannung U_{B} angeschlossen. Im Fehlerfall werden beide Einlaßventile 3,3' angesteuert, sobald der Druck P_{HZ} im Hauptzylinder den vorgegebenen Schwellwert überschritten hat und dadurch der Druckschalter 12' geschlossen wurde.

Anstelle des in Fig. 1 und 2 dargestellten druckabhängigen Schalters, oder zusätzlich, kann auch ein beschleunigungsabhängiger Schalter installiert werden, der anspricht und über die Verknüpfungsschaltung 9 zum Ansteuern des Treibers 8,8' führt, sobald die Fahrzeugbeschleunigung einen vorgegebenen Grenzwert überschreitet. Auch andere fahrzeugdynamische Meßgrößen sind zur Auslösung der Treiberansteuerung denkbar.

Ferner ist es durchaus möglich, den druck- oder beschleunigungsabhängigen Schalter (12,12') nicht nur zu der Fehlerüberwachung einzusetzen, sondern ihn auch zur Verbesserung der Regelung zu verwenden. Die mit diesen Schalter oder Sensor gewonnenen Informationen können auch - je nach Art des Schalters oder Senors - zur Berechnung der Bremsentemperatur, des Bremsdruckes, der Fahrzeugverzögerung usw. ausgewertet werden. Hierzu kann ebenfalls der Mikroprozessor 2 verwendet werden.

Gestrichelt dargestellt ist in Fig. 2 eine Signalleitung 19, die von dem Schalter oder Sensor 12' direkt zu dem Mikroprozessor 2 führt und zur Auswertung der von dem Schalter gelieferten Informationen außerhalb der Fehlerüberwachung dient.

## Patentansprüche

1. Bremsanlage mit Blockierschutzregelung (ABS) und elektronisch gesteuerter Bremskraftverteilung (EBV) mit Hilfe von elektrisch betätigten Hydraulikventilen, von denen die Einlaßventile, nämlich die den Druckmittelzufluß zu den einzelnen Radbremsen steuernden Hydraulikventile, in ihrer Ruhelage auf Durchlaß geschaltet sind, mit einer Regelelektronik zur Erzeugung der Ventil-Steuersignale in Abhängigkeit von Radsensorsignalen, die das Drehverhalten der einzelnen Räder wiedergeben, und mit einer Fehlerüberwachung, die beim Auftreten von Defekten oder Fehlfunktionen anspricht und die Regelung zumindest teilweise abschaltet oder stillegt, dadurch **gekennzeichnet**, daß die Regelelektronik (1,1') mit Sekundärschaltkreisen ausgerüstet ist, die nach Ansprechen der Fehlerüberwachung (13,13') in Funktion bleiben, über die das zu den Hinterradbremsen führende Einlaßventil (3,3') ansteuerbar ist und die derart ausgelegt sind, daß eine Konstanthaltung oder Begrenzung des Druckes in den Hinterradbremsen in Abhängigkeit von dem Bremsdruck im Hauptzylinder oder beim Überschreiten einer vorgegebenen Druckschwelle im Hauptzylinder oder in Abhängigkeit von einer fahrzeugdynamischen Meßgröße, wie Fahrzeugverzögerung oder dergleichen, erfolgt.

2. Bremsanlage nach Anspruch 1, dadurch **gekennzeichnet**, daß die Hydraulikventile (4,4',5) mit der Ausnahme der zu den Hinterradbremsen führenden Einlaßventile (3,3') an die Spannungsversorgung (U_{B}) über ein mechanisch oder elektronisches Abschaltrelais (7,7') angeschlossen sind, das von der Fehlerüberwachung (13,13') gesteuert wird und bei Fehlererkennung die Spannungsversorgung der Hydraulikventile (4,4',5) unterbricht.

3. Bremsanlage nach Anspruch 1 oder 2, dadurch **gekennzeichnet**, daß der Sekundärschaltkreis einen Treiber (8,8') zur Ansteuerung der zu den Hinterradbremsen führenden Einlaßventile (3,3') aufweist, der von der Regelelektronik (1,1') über einen logischen Verknüpfungsschaltkreis (9) nur dann angesteuert wird, wenn die Spannungsversorgung (U_{B}) der übrigen Hydraulikventile (4,4',5) abgeschaltet ist und wenn ein von dem hydraulischen Druck im Hauptzylinder abhängiger Druckschalter (12,12') oder ein auf die Fahrzeugbeschleunigung ansprechender Schalter betätigt ist.

4. Bremsanlage nach einem oder mehreren der Ansprüche 1 bis 3, dadurch **gekennzeichnet**, daß in an sich bekannter Weise dem Sekundärschaltkreis von der Regelelektronik Testpulse zugeführt und die Reaktionen auf diese Testpulse auf Plausibilität überwacht werden.

5. Bremsanlage nach einem oder mehreren der Ansprüche 1 bis 4, dadurch **gekennzeichnet**, daß mehrere zu den Hinterradbremsen führende Einlaßventile (3,3') über einen gemeisamen Sekundärkreis ansteuerbar sind, wobei die Einlaßventile (3,3') über Entkoppeldioden (17,18) an eine gemeinsame Endstufe (Treiber 8') des Sekundärkreises angeschlossen sind.

6. Bremsanlage nach einem oder mehreren der Ansprüche 1 bis 5, dadurch **gekennzeichnet**, daß die druck- oder beschleunigungsabhängigen Schalter (12,12'), solange die Fehlerüberwachung nicht anspricht, zur Gewinnung zusätzlicher Informationen für die Regelung dienen.

## Claims

1. A brake system including anti-lock control (ABS) and electronically controlled brake force distribution (EBV) by means of electrically operated hydraulic valves, of which the inlet valves, i.e. the hydraulic valves controlling the pressure fluid flow to the individual wheel brakes, are open in their inactive position, further including control electronics to generate the valve control signals in response to wheel sensor signals representative of the rotational behavior of the individual wheels, and an error monitoring device which responds upon the occurrence of defects or malfunctions and disconnects or deactivates the control at least in part,
**characterized** in that the control electronics (1, 1') include secondary circuits which remain operative after response of the error monitoring device (13, 13'), by way of which circuits the inlet valve (3, 3') leading to the rear-wheel brakes is controllable, and which are provided such that the pressure in the rear-wheel brakes is maintained constant or limited in dependence on the braking pressure in the master cylinder, or when a predetermined pressure threshold in the master cylinder is exceeded, or in dependence on a measured quantity related to vehicle dynamics, such as vehicle deceleration, or the like.

2. A brake system as claimed in claim 1,
**characterized** in that the hydraulic valves (4, 4', 5), with the exception of the inlet valves (3, 3') leading to the rear-wheel brakes, are connected to the voltage supply (U_{B}) by way of a mechanic or electronic disconnecting relay (7, 7') which is controlled by the error monitoring device (13, 13') and, on detection of malfunction, interrupts the voltage supply of the hydraulic valves (4, 4', 5).

3. A brake system as claimed in claim 1 or claim 2, **characterized** in that the secondary circuit includes a driver (8, 8') to actuate the inlet valves (3, 3') leading to the rear-wheel brakes, the driver being actuated by the control electronics (1, 1') by way of a logic circuit (9) only if the voltage supply (U_{B}) of the other hydraulic valves (4, 4', 5) is disconnected and a pressure switch (12, 12'), operated by the hydraulic pressure in the master cylinder, or a switch responding to the vehicle acceleration is operated.

4. A brake system as claimed in any one or more of claims 1 to 3,
**characterized** in that test pulses are fed, in a manner known per se, to the secondary circuit by the controller electronics, and the reactions to these test pulses are monitored for plausibility.

5. A brake system as claimed in any one or more of claims 1 to 4,
**characterized** in that a plurality of inlet valves (3, 3') leading to the rear-wheel brakes are actuatable by a joint secondary circuit, the inlet valves (3, 3') being connected to a joint end stage (driver 8') of the secondary circuit by way of decoupling diodes (17, 18).

6. A brake system as claimed in any one or more of claims 1 to 5,
**characterized** in that the pressure-responsive or acceleration-responsive switches (12, 12') serve to acquire additional information for the control as long as the error monitoring device does not respond.

## Revendications

1. Système de freinage à régulation antiblocage (ABS) et à répartition de la force de freinage à commande électronique (EBV) au moyen de valves hydrauliques à actionnement électrique parmi lesquelles les valves d'entrée, c'est-à-dire les valves hydrauliques commandant l'apport d'agent de pression aux différents freins de roue, sont, en position de repos, commutées à l'état passant, le système de freinage comprenant un circuit électronique de régulation, servant à produire les signaux de commande de valve en fonction de signaux de capteur de roue qui reproduisent le comportement des différentes roues en rotation, et des moyens de surveillance de défaut qui réagissent lors de l'apparition de défauts ou de fonctionnements défectueux et coupent la régulation ou la mettent hors service, au moins partiellement, caractérisé en ce que le circuit électronique de régulation (1, 1') comporte des circuits secondaires qui restent en fonction après que les moyens de surveillance de défaut (13, 13') ont réagi et au moyen desquels la valve d'entrée (3, 3') menant aux freins de roue arrière peut être commandée, ces circuits secondaires étant agencés de façon qu'il se produise un maintien à valeur constante ou une limitation de la pression dans les freins de roue arrière en fonction de la pression de freinage régnant dans le maître-cylindre, ou lorsqu'un seuil de pression préfixé est dépassé dans le maître-cylindre, ou en fonction d'une grandeur dynamique mesurée du véhicule, telle que la décélération du véhicule ou des grandeurs analogues.

2. Système de freinage selon la revendication 1, caractérisé en ce que les valves hydrauliques (4, 4', 5), à l'exception des valves d'entrée (3, 3') menant aux freins de roue arrière, sont raccordées à l'alimentation en courant (UB) au moyen d'un relais mécanique ou électronique de mise hors service (7, 7') qui est commandé par les moyens de surveillance de défaut (13, 13') et qui, lorsqu'un défaut est constaté, interrompt l'alimentation en courant des valves hydrauliques (4, 4' 5).

3. Système de freinage selon la revendication 1 ou 2, caractérisé en ce que le circuit secondaire comprend un étage excitateur (8, 8') qui sert à commander les valves d'entrée (3, 3') menant aux freins de roue arrière et qui n'est commandé par le circuit électronique de régulation (1, 1'), par l'intermédiaire d'un circuit d'opération logique (9), que lorsque l'alimentation en courant (UB) des autres valves hydrauliques (4, 4', 5) est coupée et lorsqu'est actionné un interrupteur manométrique (12, 12'), dépendant de la pression hydraulique dans le maître-cylindre, ou un interrupteur réagissant à l'accélération du véhicule.

4. Système de freinage sleon une ou plusieurs des revendications 1 à 3, caratérisé en ce que , d'une manière en soi connue, des impulsions d'essai sont envoyées au circuit secondaire par le circuit électronique de régulation et les réactions à ces impulsions d'essai sont surveillées en ce qui concerne la plausibilité.

5. Système de freinage selon une ou plusieurs des revendications 1 à 4, caractérisé en ce que plusieurs valves d'entrée (3, 3') menant aux freins de roue arrière sont agencées de façon à pouvoir être commandées au moyen d'un circuit secondaire commun, les valves d'entrée (3, 3') étant raccordées par l'intermédiaire de diodes de découplage (17, 18) à un étage final (étage excitateur 8') commun du circuit secondaire.

6. Système de freinage selon une ou plusieurs des revendications 1 à 5, caractérisé en ce que les interrupteurs (12, 12') dépendant de la pression ou de l'accélération permettent d'obtenir des informations supplémentaires pour la régulation tant que les moyens de surveillance de défaut ne réagissent pas.
